# EUROPEAN PATENT SPECIFICATION

(11) **EP 2 382 957 B1**
(45) Date of publication and mention of the grant of the patent: **20.04.2016**
(21) Application number: 11164086.8
(22) Date of filing: 28.04.2011
(51) Int. Cl.: F16D 13/52

(54) **Foot bath assembly**
Fußbadanordnung
Ensemble de bain de pied

(30) Priority: 28.04.2010 GB 201007033
(43) Date of publication of application: 02.11.2011
(73) Proprietor: Parkside Nails Supplies Limited, Barnet Hertfordshire EN5 5BY (GB)
(72) Inventor: Tran, Son, London, N9 9PN (GB)
(74) Representative: Sanderson & Co.

(56) References cited:
- WO-A1-2009/028119
- CN-Y- 201 019 300
- CN-Y- 201 375 227
- JP-U- H0 254 447
- KR-B1- 100 920 523
- US-A1- 2001 041 852
- US-A1- 2007 060 850

## Description

This invention relates, in a first aspect thereof, to a foot bath assembly for a massage chair. In a further aspect thereof, the invention relates to a massage chair incorporating such a foot bath assembly.

The combination of foot baths or foot spas with massage chairs or pedicure chairs in nail salons, beauty salons and the like, is clearly desirable. This enables a customer to obtain a pedicure or foot massage in comfort and facilitates treatment or massage of other parts of the body in the same session. For example, US 2001/0041852 A1 describes a massage chair having a whirlpool foot bath. Known examples of massage chair and foot bath combinations generally involve the provision of both the chair and the foot bath on a fixed base, which houses the necessary plumbing and heating components for the foot bath. This arrangement however is rather cumbersome and occupies a substantial amount of space. Additionally, due to the location of the foot bath, such chairs lack versatility in that the customer cannot assume a normal sitting position with his or feet placed on the floor in front of the chair, as might be required for other beauty salon treatments.

The present invention seeks to provide a massage chair and foot bath combination in which the foot bath may be retracted underneath the massage chair for storage when not in use, thus presenting a versatile, space-saving and convenient alternative to the devices of the known prior art.

US 2007/0060850 A1 describes a massage chair having a leg massage unit that can be stored under the chair. Rather than describing a massage chair, KR 100920523 B1 describes a steam chair having a foot steaming compartment that can be moved manually between a storage position beneath the chair and an active position forwardly of the chair.

According to a first aspect of the present invention there is provided a foot bath assembly for a massage chair, said foot bath assembly comprising:
- a foot bath having a tub compartment adapted to accommodate a user's feet;
- mounting means for mounting said foot bath on a massage chair; and
- drive means adapted to effect linear motion of said foot bath between a storage position wherein the foot bath is storable beneath said massage chair, and an active position wherein the foot bath is deployable forwardly of the massage chair such that when in use, a user sitting or reclining on the massage chair may comfortably place his or her feet in the tub compartment;
- wherein the drive means further comprises a gearing mechanism, wherein the gearing mechanism is a rack and pinion mechanism, wherein the mounting means comprises one or more guide members each adapted to receive a rack slidably engaged therewith, thereby to facilitate said linear motion of the foot bath between its storage and active positions, and wherein the foot bath comprises one or more channels adapted to receive said guide members when the foot bath is in its storage position.

Preferably, the mounting means is fixedly attached to the massage chair, and the foot bath is slidably engaged with said mounting means.

The term "foot bath assembly" as used herein should be interpreted also to include such plumbing and heating components as are necessary for operation of the foot bath. Such components may be of any known arrangement and will not be discussed herein. It should be appreciated however that the presence of such components imparts significant weight to the foot bath assembly, whilst their protection from damage during motion of the foot bath between its storage and active positions is of paramount importance. As such, manual sliding of the foot bath is highly undesirable, and the drive means is thus an essential component of the present invention.

The drive means is preferably adapted to effect reversible linear motion of said foot bath between its storage and active positions. In preferred embodiments of the present invention, the drive means comprises one or more electric motors, and most preferably comprises two opposed like electric motors. In such preferred embodiments, the reversible linear motion of the foot bath is preferably effected by configuring the or each electric motor, via a transformer, to run in both forward and backward (clockwise and anti-clockwise) directions. The drive means is preferably adapted to be operable electrically by remote control.

In preferred embodiments, the or each electric motor is arranged to cause rotation of a pinion provided on said mounting means, each said pinion being engaged with a rack provided on said foot bath, thereby to effect linear motion of said foot bath between its storage and active positions.

Although the foot bath assembly of the present invention would function with a single electric motor adapted to engage with a single gearing mechanism, to ensure a smooth and stable motion it is much preferred that assembly should comprise first and second opposed like electric motors, first and second opposed parallel rack and pinion gearing mechanisms associated therewith, and first and second opposed parallel guide members associated with said gearing mechanisms. To further facilitate smooth motion of the foot bath between its storage and active positions, the foot bath is preferably provided with one or wheels on its underside.

The foot bath of the present invention comprises one or more channels adapted to receive the guide members when the foot bath is in its storage position. One channel may be provided for each guide member, or a single channel may be provided to accommodate all guide members.

The mounting means preferably further comprises a fixing bar to enable the foot bath assembly to be mounted on the frame of a massage chair.

The present invention includes within its scope both a foot bath assembly for mounting on a massage chair, as hereinbefore described, and a massage chair having such foot bath assembly incorporated as an integral component thereof.

Therefore, according to a second aspect of the present invention there is provided a massage chair having a frame and a seat portion, and incorporating:
- a foot bath having a tub compartment adapted to accommodate a user's feet;
- mounting means for mounting the foot bath on the frame of the massage chair; and
- drive means adapted to effect linear motion of the foot bath between a storage position wherein the foot bath is stored beneath the seat portion of the massage chair, and an active position wherein the foot bath is deployed forwardly of the massage chair such that when in use, a user sitting or reclining on the seat portion may comfortably place his or her feet in the tub compartment.

The massage chair according to the second aspect of the present invention may comprise all preferred features of the foot bath assembly according to the first aspect of the present invention, as hereinbefore described.

In order that the present invention may be more clearly understood, a preferred embodiment thereof will now be described in detail, though only by way of example, with reference to the accompanying drawings in which:
Figure 1 shows a perspective, partially exploded view of a preferred embodiment of foot bath assembly according to a first aspect of the present invention;
Figure 2 shows an enlarged view of a detail of the drive means of the foot bath assembly of Figure 1; and
Figure 3 shows a perspective view of the foot bath assembly of Figure 1, mounted on a massage chair thereby to form a massage chair according to a second aspect of the present invention.

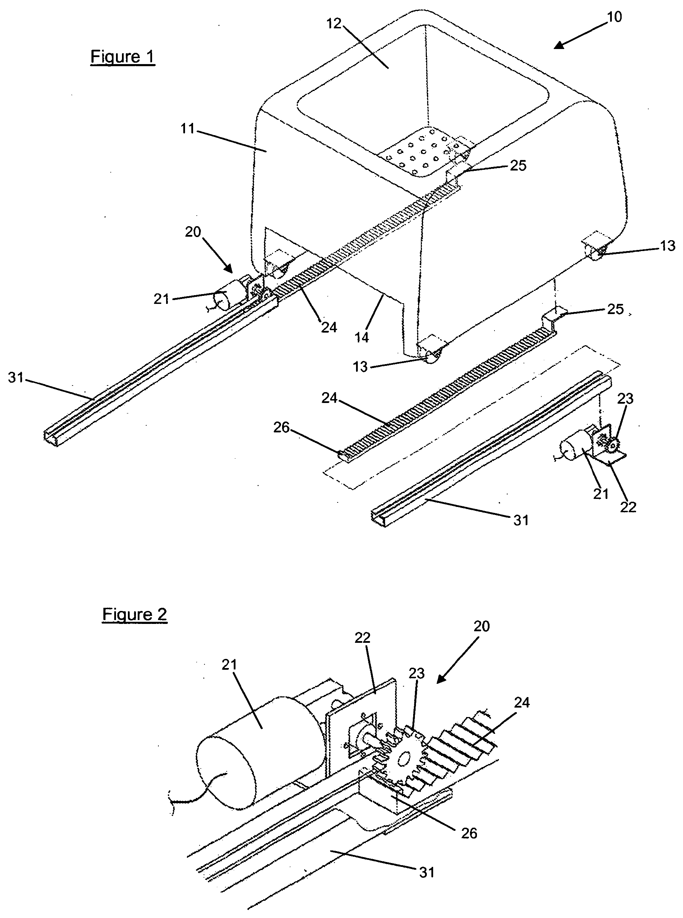

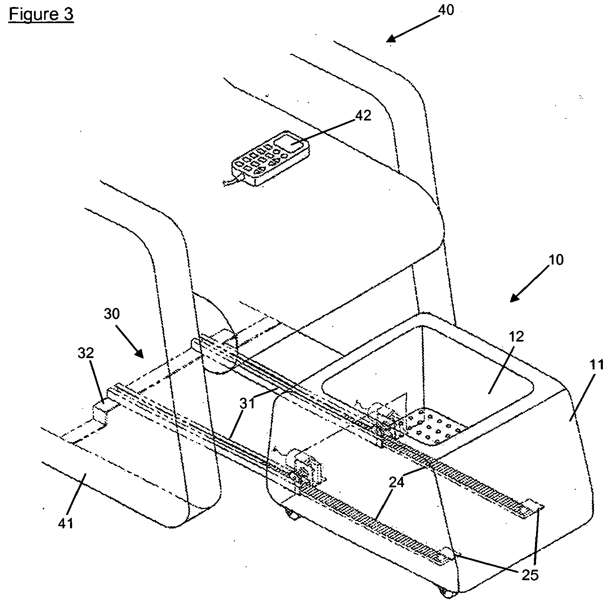

Referring first to Figure 1, there is shown a preferred embodiment of foot bath assembly, generally indicated 10, according to a first aspect of the present invention. The foot bath assembly 10 comprises a foot bath 11, drive means, generally indicated 20, (as will be described below in more detail with reference to Figure 2) and a pair of opposed guide members 31 constituting part of mounting means 30, for mounting the foot bath assembly 10 on a massage chair 40 (as will be described in more detail below with reference to Figure 3).

The foot bath 11 has an inner tub compartment 12, adapted to accommodate a user's feet (not shown), and operates in the same manner as a conventional foot bath, so far as heating and plumbing considerations are concerned. The foot bath 11 constituting part of the foot bath assembly 10 of the present invention however is adapted for mounting on a massage chair (40, not shown in Figure 1), such that said foot bath 11 is adapted for reversible linear motion between a storage position in which it is stored beneath the massage chair 40, and an active position in which it is deployed forwardly so that a user sitting or reclining on the massage chair 40 may comfortably place his or her feet in the tub compartment 12.

This linear motion is effected primarily by the drive means 20. To assist in obtaining a smooth motion however, the foot bath 11 is also provided with four undriven wheels 13, adjacent each corner thereof and arranged to contact the floor beneath the massage chair 40 and foot bath assembly 10. The foot bath 11 is further provided with a cut-out channel section 14, to accommodate the drive means 20 and the guide members 31.

The drive means 20 comprises a pair of electric motors 21. As can best be seen in Figure 2, each electric motor 21 is fixedly mounted via a bracket 22 to one of the guide members 31. Each electric motor 21 is arranged to cause rotation of a pinion gear 23, the teeth of which are engaged with a complementary rack gear 24, thus causing linear motion of said rack gear 24 relative to the guide member 31 on which the electric motor 21 is fixed.

Referring again to Figure 1, it can be seen that one end 25 of each rack gear 24 is fixedly attached to the foot bath 11 beneath the tub compartment 12, whilst the other end 26 of each rack gear 24 engages with one of the guide members 31 and is arranged for sliding motion within said guide member 31.

Referring now to Figure 3, there is shown part of a massage chair, generally indicated 40, having the foot bath assembly 10 of Figure 1 mounted thereon, effectively to form a massage chair according to a second aspect of the present invention. The foot bath assembly 10 is mounted on the massage chair 40 via mounting means 30 comprising the guide members 31 and a fixing bar 32. The fixing bar 32 is fixedly attached to the frame 41 of the massage chair 40, and the guide members 31 are fixedly attached to the fixing bar 32, effectively making the guide members 31 part of the frame 41 of the massage chair 40.

As discussed above with reference to Figures 1 and 2, operation of the electric motors 21, which are fixedly mounted on the guide members 31, causes rotation of the pinion gears 23, which in turn causes linear motion of the rack gears 24, relative to the guide members 31 with which they are engaged. As the rack gears 24 are fixed to the foot bath 11 and the guide members 31 are fixed to the massage chair 40, this effects linear motion of the foot bath 11 between its storage and active positions, with the guide members 31 being accommodated within the channel 14 of the foot bath 10 when the foot bath 10 is in its storage position.

By configuring the electric motors 21, via a transformer (not shown) to be operable in both forwards and reverse motions, the foot bath 10 can be driven between its storage and active positions as required. Operation of the electric motors 12, and the transformer can be controlled via remote control 42.

## Claims

1. A foot bath assembly (10) for a massage chair (40), said foot bath assembly (10) comprising:
- a foot bath (11) having a tub compartment (12) adapted to accommodate a user's feet;
- mounting means (30) for mounting said foot bath (11) on a massage chair (40); and
- drive means (20) adapted to effect linear motion of said foot bath (11) between a storage position wherein the foot bath (11) is storable beneath said massage chair (40), and an active position wherein the foot bath (11) is deployable forwardly of the massage chair (40) such that when in use, a user sitting or reclining on the massage chair (40) may comfortably place his or her feet in the tub compartment (12);
- wherein the drive means (20) further comprises a gearing mechanism (23, 24), wherein the gearing mechanism is a rack and pinion mechanism, wherein the mounting means (30) comprises one or more guide members (31) each adapted to receive a rack (24) slidably engaged therewith, thereby to facilitate said linear motion of the foot bath (11) between its storage and active positions, and wherein the foot bath (11) comprises one or more channels (14) adapted to receive said guide members (31) when the foot bath (11) is in its storage position.

2. A foot bath assembly (10) as claimed in claim 1, wherein the mounting means (30) is fixedly attached to the massage chair (40), and the foot bath (11) is slidably engaged with said mounting means (30).

3. A foot bath assembly (10) as claimed in claim 2, wherein the drive means (20) is adapted to effect reversible linear motion of said foot bath (11) between its storage and active positions.

4. A foot bath assembly (10) as claimed in claim 3, wherein the drive means (20) comprises one or more electric motors (21).

5. A foot bath assembly (10) as claimed in claim 4, wherein the or each electric motor (21) is arranged to cause rotation of a pinion (23) provided on said mounting means (30), each said pinion (23) being engaged with a rack (24) provided on said foot bath (11), thereby to effect linear motion of said foot bath (11) between its storage and active positions.

6. A foot bath assembly (10) as claimed in claim 5, comprising first and second opposed like electric motors (21), first and second opposed parallel rack and pinion gearing mechanisms (23, 24) associated therewith, and first and second opposed parallel guide members (31) associated with said gearing mechanisms (23, 24).

7. A foot bath assembly (10) as claimed in any of the preceding claims, wherein the drive means (20) is operable by remote control (42).

8. A foot bath assembly (10) as claimed in any of the preceding claims, for a massage chair (40) having a frame (41), wherein the mounting means (30) comprises a fixing bar (32) for mounting to said frame (41).

9. A foot bath assembly (10) as claimed in any of the preceding claims, wherein the foot bath (11) is provided with one or more wheels (13) on its underside, thereby to facilitate linear motion of said foot bath (11) between its storage and active positions.

10. A massage chair (40) having a frame (41) and a seat portion, and incorporating a foot bath assembly (10) as claimed in any of the preceding claims, wherein:
- the mounting means (30) is for mounting the foot bath (11) on the frame (41) of the massage chair (40); and
- the drive means (20) is adapted to effect linear motion of the foot bath (11) between a storage position wherein the foot bath (11) is stored beneath the seat portion of the massage chair (40), and an active position wherein the foot bath (11) is deployed forwardly of the massage chair (40) such that when in use, a user sitting or reclining on the seat portion may comfortably place his or her feet in the tub compartment (12).

## Patentansprüche

1. Eine Fußbadanordnung (10) für einen Massagestuhl (40), wobei die Fußbadanordnung (10) umfasst:
- ein Fußbad (11) mit einem Wannenbereich (12), um die Füße eines Benutzers aufzunehmen;
- Befestigungsmittel (30) zur Befestigung des Fußbads (11) an einem Massagestuhl (40); und
- Antriebsmittel (20), die geeignet sind, eine lineare Bewegung des Fußbads (11) zwischen einer Aufbewahrungsposition, in der das Fußbad (11) unter dem Massagestuhl (40) aufbewahrt werden kann, und einer Betriebsposition, in der das Fußbad (11) vor dem Massagestuhl (40) derart positionierbar ist, dass während des Gebrauchs ein auf dem Massagestuhl (40) sitzender oder lehnender Benutzer seine oder ihre Füße komfortabel in dem Wannenbereich (12) platzieren kann;
- wobei die Antriebsmittel (20) weiter einen Getriebemechanismus (23, 24) umfassen, wobei der Getriebemechanismus ein Zahnstangen- und Ritzelmechanismus ist, wobei die Befestigungsmittel (30) einen oder mehrere Führungselemente (31) umfassen, die jeweils dazu ausgebildet sind, die Zahnstange (24) verschiebbar gelagert aufzunehmen, wodurch die lineare Bewegung des Fußbads (11) zwischen der Aufbewahrungs- und der Betriebsposition ermöglicht wird, und wobei das Fußbad (11) ein oder mehrere Kanäle (14) aufweist, die ausgebildet sind, die Führungselemente (31) aufzunehmen wenn das Fußbad (11) in seiner Aufbewahrungsposition ist.

2. Eine Fußbadanordnung (10) nach Patentanspruch 1, wobei die Befestigungsmittel (30) an dem Massagestuhl (40) unbeweglich fixiert sind, und das Fußbad (11) mit den Befestigungsmitteln (30) verschiebbar verbunden sind.

3. Eine Fußbadanordnung (10) nach Patentanspruch 2, wobei die Antriebsmittel (20) ausgebildet sind, eine reversible lineare Bewegung des Fußbads (11) zwischen seiner Aufbewahrungs- und seiner Betriebsposition zu bewirken.

4. Eine Fußbadanordnung (10) nach Patentanspruch 3, wobei die Antriebsmittel (20) ein oder mehrere Elektromotoren (21) umfassen.

5. Eine Fußbadanordnung (10) nach Patentanspruch 4, wobei der oder jeder Elektromotor (21) eingerichtet ist, eine Rotation eines Ritzels (23) zu bewirken, das an den Befestigungsmitteln (30) vorgesehen ist, wobei jedes der Ritzel (23) mit einer Zahnstange (24) in Eingriff steht, die an dem Fußbad (11) angeordnet ist, wodurch eine lineare Bewegung des Fußbads (11) zwischen seiner Aufbewahrungs- und seiner Betriebsposition bewirkt wird.

6. Eine Fußbadanordnung (10) nach Patentanspruch 5, umfassend erste und zweite einander annähernd gegenüberliegende Elektromotoren (21), erste und zweite damit in Verbindung stehende, einander gegenüberliegende, parallele Zahnstangen und Ritzel Getriebemechanismen (23, 24), und erste und zweite einander gegenüberliegende parallele Führungselemente (31), die mit den Getriebemechanismen (23, 24) in Verbindung stehen.

7. Eine Fußbadanordnung (10) nach einem der vorhergehenden Patentansprüche, wobei die Antriebsmittel (20) mithilfe einer Fernbedienung (42) betätigbar sind.

8. Eine Fußbadanordnung (10) nach einem der vorhergehenden Patentansprüche für einen Massagestuhl (40) mit einem Rahmen (41), wobei die Befestigungsmittel (30) einen Befestigungsbalken (32) zur Befestigung an dem Rahmen (41) umfassen.

9. Eine Fußbadanordnung (10) nach einem der vorhergehenden Ansprüche, wobei das Fußbad (11) an seiner Unterseite ein oder mehrere Räder (13) aufweist, wodurch die lineare Bewegung des Fußbads (11) zwischen seiner Aufbewahrungs- und seiner Betriebsposition ermöglicht wird.

10. Ein Massagestuhl (40) mit einem Rahmen (41) und einem Sitzteil sowie einschließlich einer Fußbadordnung (10) nach einem der vorhergehenden Ansprüche, wobei:
- die Befestigungsmittel (30) zur Befestigung des Fußbads (11) an dem Rahmen (41) des Massagestuhls (40) dienen; und
- die Antriebsmittel (20) ausgebildet sind, eine lineare Bewegung des Fußbads (11) zwischen einer Aufbewahrungsposition, in der das Fußbad (11) unter dem Sitzteil des Massagestuhls (40) angeordnet ist, und einer Betriebsposition, in der das Fußbad (11) vor dem Massagestuhl (40) derart positioniert ist, dass während des Gebrauchs ein Benutzer, der auf dem Sitzteil sitzt oder lehnt komfortabel seine oder ihre Füße in dem Wannenbereich (12) platzieren kann.

## Revendications

1. Ensemble de bain de pied (10) pour un fauteuil de massage (40), ledit ensemble de bain de pied (10) comprenant :
- un pédiluve (11) comportant un bac (12) agencé pour recevoir un pied d'un utilisateur ;
- des moyens de fixation (30) pour monter ledit pédiluve (11) sur un fauteuil de massage (40) ; et
- des moyens d'entraînement (20) agencés pour déplacer linéairement ledit pédiluve (11) entre une position de rangement dans laquelle le pédiluve (11) peut être rangé sous ledit fauteuil de massage (40), et une position d'utilisation dans laquelle le pédiluve (11) peut être déployé en avant du fauteuil de massage (40) de sorte que lors d'une utilisation, un utilisateur assis ou allongé sur le fauteuil de massage (40) peut placer confortablement son ou ses pieds dans le bac (12) ;
- les moyens d'entraînement (20) comprenant en outre un mécanisme à engrenage (23, 24), le mécanisme à engrenage étant un mécanisme à crémaillère et à pignon, les moyens de fixation (30) comprenant un ou plusieurs éléments de guidage (31) chacun agencé pour recevoir une crémaillère (24) avec laquelle il est monté coulissant, facilitant ainsi ledit déplacement linéaire du pédiluve (11) entre ses positions de rangement et d'utilisation, le pédiluve (11) comprenant un ou plusieurs canaux (14) agencés pour recevoir lesdits éléments de guidage (31) lorsque le pédiluve (11) est dans sa position de rangement.

2. Ensemble de bain de pied selon la revendication 1, dans lequel les moyens de fixation (30) sont solidairement attachés au fauteuil de massage (40), et le pédiluve (11) est monté coulissant avec les moyens de fixation (30).

3. Ensemble de bain de pied selon la revendication 2, dans lequel les moyens d'entraînement (20) sont agencés pour déplacer linéairement et de manière réversible ledit pédiluve (11) entre ses positions de rangement et d'utilisation.

4. Ensemble de bain de pied selon la revendication 3, dans lequel les moyens d'entraînement (20) comprennent un ou plusieurs moteurs électriques (21).

5. Ensemble de bain de pied selon la revendication 4, dans lequel le ou chaque moteur électrique (21) est agencé pour entraîner en rotation un pignon (23) installé sur lesdits moyens de fixation (30), chacun desdits pignons (23) s'engrenant avec une crémaillère (24) installée sur ledit pédiluve (11), afin de déplacer linéairement ledit pédiluve (11) entre ses positions de rangement et d'utilisation.

6. Ensemble de bain de pied (10) selon la revendication 5, comprenant des premier et deuxième moteurs électriques (21) opposés similaires, des premier et deuxième mécanismes à engrenage (23, 24) opposés parallèles avec pignon et crémaillère, lesdits premier et deuxième mécanismes à engrenage étant associés auxdits premier et deuxième moteurs électriques, et des premier et deuxième éléments de guidage (31) opposés parallèles associés auxdits mécanismes à engrenage (23, 24).

7. Ensemble de bain de pied (10) selon l'une des revendications précédentes, dans lequel les moyens d'entraînement (20) sont commandés par une commande à distance (42).

8. Ensemble de bain de pied (10) selon l'une des revendications précédentes, pour un fauteuil de massage (40) comprenant un bâti (41), les moyens de fixation (30) comprenant une barre de fixation (32) pour l'assemblage audit bâti (41).

9. Ensemble de bain de pied (10) selon l'une des revendications précédentes, dans lequel le pédiluve (11) est équipé d'une ou plusieurs roues (13) sur sa face inférieure, facilitant ainsi le déplacement linéaire dudit pédiluve (11) entre ses positions de rangement et d'utilisation.

10. Fauteuil de massage (40) comprenant un bâti (41) et une assise, et incorporant un ensemble de bain de pied (10) selon l'une des revendications précédentes,
- les moyens de fixation (30) étant destinés au montage du pédiluve (11) sur la bâti (41) du fauteuil de massage (40) ; et
- les moyens d'entraînement (20) étant agencés pour déplacer linéairement le pédiluve (11) entre une position de rangement dans laquelle le pédiluve (11) est rangé sous l'assise du fauteuil de massage (40), et une position d'utilisation dans laquelle le pédiluve (11) est déployé en avant du fauteuil de massage (40) de sorte que lors d'une utilisation, un utilisateur assis ou allongé sur l'assise peut placer confortablement son ou ses pieds dans le bac (12).
